# EUROPEAN PATENT APPLICATION

(11) **EP 4 742 436 A1**
(43) Date of publication of application: **13.05.2026**
(21) Application number: 24901759.1
(22) Date of filing: 06.11.2024
(51) Int. Cl.: H01M 50/673

(54) **IMMERSION LIQUID-COOLING TANK AND BATTERY PACK**

(30) Priority: 23.09.2024 CN 202422322693 U; 23.09.2024 CN 202411329224
(71) Applicant: Eve Energy Co., Ltd., Huizhou, Guangdong 516006 (CN)
(72) Inventor: LU, Yiming, Guangdong 516006 (CN); XIAO, Peng, Guangdong 516006 (CN); LI, Xingyao, Guangdong 516006 (CN); ZHENG Guangyi, Guangdong 516006 (CN)
(74) Representative: Berggren Oy
(86) International application number: PCT/CN2024/130147
(87) International publication number: WO 2026/060793

(57) **Abstract**

An immersion liquid cooling box and a battery pack are provided in this application. The immersion liquid cooling box includes a box body. An immersion chamber for placing battery cells are formed in the box body. A liquid inlet and a liquid outlet of the immersion chamber are formed on an outer surface of the box body. The liquid inlet and the liquid outlet are formed on two opposite sides of the box body in a width direction.

## Description

This application claims the priorities to Chinese Patent Applications Nos. 202422322693.8 and 202411329224.7, submitted to the Chinese Patent Office on September 23, 2024, the contents of all of which are incorporated by reference in their entirety.

### TECHNICAL FIELD

This application relates to the field of battery technologies, and in particular to an immersion liquid cooling box and a battery pack.

### BACKGROUND

In the field of battery technologies, cooling structures are often used to lower temperature of battery cells in a battery module to ensure the safety of the battery in use.

In related technologies, a liquid cooling bottom plate can be used to regulate the temperature of the battery cells, and immersion liquid cooling can also be used to regulate the temperature of the battery cells.

### SUMMARY

In the immersion liquid cooling, immersion liquid typically flows into an immersion chamber from a bottom plate and flows out of the immersion chamber from a position close to a top plate. A liquid inlet and a liquid outlet are arranged on two opposite sides of a box body in a length direction of the box body. As a result, a flow path of the immersion liquid is long, leading to a significant temperature difference between battery cells at the liquid inlet and battery cells at the liquid outlet.

An immersion liquid cooling box is provided in the present application. The immersion liquid cooling box includes a box body, and an immersion chamber for placing battery cells is formed in the box body. A liquid inlet and a liquid outlet of the immersion chamber are formed on an outer surface of the box body. The liquid inlet and the liquid outlet are located on two opposite sides of the box body along a width direction of the box body.

A battery pack is further provided in the present application. The battery pack includes the immersion liquid cooling box mentioned above.

### Beneficial effects

The immersion liquid cooling box according to this application is configured to form a liquid inlet and a liquid outlet on two opposite sides of a box body in a width direction, so that immersion liquid flows along the width direction of the box body, thereby shortening a flow path of the immersion liquid, lowering a temperature difference among battery cells, and extending the service life of a battery.

### BRIEF DESCRIPTION OF THE DRAWINGS

Figure 1 is a perspective schematic diagram of a box body according to embodiments of the present application.
Figure 2 is a schematic diagram showing the arrangement of battery cells according to the embodiments of the present application.
Figure 3 is a sectional view of a box body with battery cells placed therein according to the embodiments of the present application.
Figure 4 is a sectional view of a box body without battery cells placed therein according to the embodiments of the present application.
Figure 5 is a streamline diagram of immersion liquid in an immersion liquid cooling box according to the embodiments of the present application.
Figure 6 is another streamline diagram of immersion liquid in an immersion liquid cooling box according to the embodiments of the present application.
Figure 7 is still another streamline diagram of immersion liquid in an immersion liquid cooling box according to the embodiments of the present application.

Reference numerals in the accompanying drawings:
10, box body; 110, immersion chamber; 120, liquid inlet; 130, liquid outlet; 20, liquid inlet pipeline; 210, liquid spray port; 220, liquid spray pipe; 30, liquid outlet pipeline; 310, through hole; 320, liquid discharge pipe; 40, installation area; 410, installation position; 50, flow guidance channel; 510, first gap; 520, second gap; 60, battery cell; 70, flow guidance region.

### DETAILED DESCRIPTION OF THE PREFERRED EMBODIMENTS

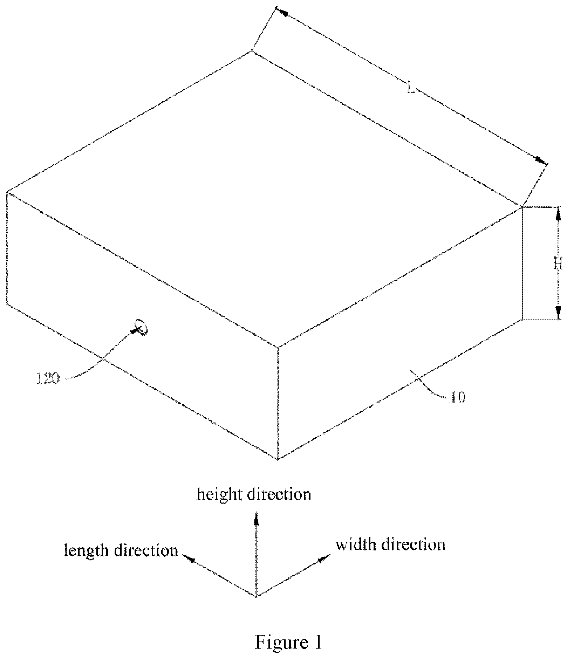

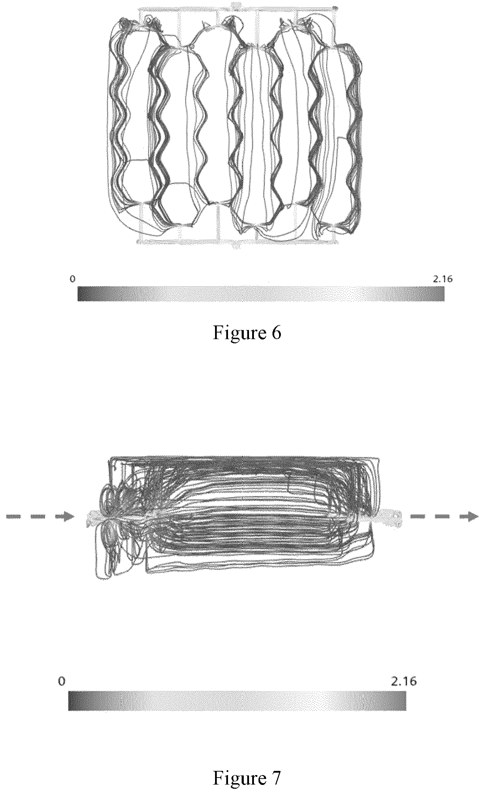

Please refer to Figure 1 to Figure 7, embodiments of the subject application provide an immersion liquid cooling box. The immersion liquid cooling box includes a box body 10. An immersion chamber 110 for placing battery cells 60 is formed in the box body 10. A liquid inlet 120 and a liquid outlet 130 of the immersion chamber 110 are formed on an outer surface of the box body 10. The liquid inlet 120 and the liquid outlet 130 are formed on two opposite sides of the box body 10 in a width direction of the box body.

In the embodiments of the present application, the liquid inlet 120 and the liquid outlet 130 are formed on two opposite sides of the box body 10 in the width direction thereof, so that immersion liquid can flow along the width direction of the box body 10, thereby shortening a flow path of the immersion liquid, lowering a temperature difference between the battery cells 60, and extending the service life of the battery.

It can be understood that the liquid inlet 120 is served as an inlet for the immersion liquid to flow into the immersion chamber 110, and the liquid outlet 130 is served as an outlet for the immersion liquid to flow out of the immersion chamber 110. The immersion liquid flows into the immersion chamber 110 from the liquid inlet 120 at a certain flow rate. Once the immersion liquid comes into contact with the battery cells 60, the immersion liquid can be dispersed in four directions: up, down, left, and right, and continuously flows towards the liquid outlet 130 through a gap between two adjacent battery cells 60. As a result, the flow path of the immersion liquid can be shortened, lowering the temperature difference between the battery cells 60 and improving the temperature consistency of the battery cells 60.

In some embodiments, the box body 10 is configured in a shape of a rectangular prism. The box body 10 has length edges, width edges, and height edges. A width direction of the box body 10 is a direction in which the width edges of the box body 10 extend. A length direction of the box body 10 is a direction in which the length edges of the box body 10 extend. A height direction of the box body 10 is a direction in which the height edges of the box body 10 extend.

Because the box body 10 is configured in a shape of a rectangular prism, the immersion chamber 110 can also be configured in a shape of a rectangular prism. In case that the immersion chamber 110 is in a shape of a rectangular prism, the battery cells 60 in a shape of a cube are suitable to be placed in the immersion chamber 110. In case that the battery cells 60 are in a shape of a cylinder, an inner surface of the immersion chamber 110 may be arranged in a shape of a circular arc, and a radius of the circular arc matches a radius of the battery cells 60.

An opening can be formed at an upper surface of the box body 10 to allow the battery cells 60 to be placed into the immersion chamber 110 from the opening. The opening can be closed by a box cover, and the box cover can be sealed to the box body 10 through a sealing element to prevent the immersion liquid from overflowing from the opening of the box body 10.

In some embodiments, both the liquid inlet 120 and the liquid outlet 130 are formed at a middle part of the box body 10 along the height direction.

It can be understood that both the liquid inlet 120 and the liquid outlet 130 are formed at the middle part of the box body 10 along the height direction, so that a height of the liquid inlet 120 is the same as a height of the liquid outlet 130, ensuring that the immersion liquid follows the shortest flow path. In addition, the liquid inlet 120 is aligned with the liquid outlet 130 along the height direction, so that the possibility of vortex formation in the immersion liquid can be reduced, thereby lowering flow resistance and improving heat transfer efficiency.

For example, as shown in Figure 1, a height of the box body 10 is H. The middle part along the height direction can be positioned at 1/2H. In case that the immersion liquid is injected into the immersion chamber 110 at a certain flow rate and comes into contact with the battery cells 60, the immersion liquid can be dispersed in four directions: up, down, left, and right. The liquid inlet 120 is positioned at 1/2H, so that the flow paths of the immersion liquid dispersed upwards and downwards are the same, thereby facilitating the cooling effect on upper and lower regions of the battery cells 60 to be the same and improving temperature consistency of the battery cells 60. In addition, the liquid inlet 120 is positioned at 1/2H, so that the immersion liquid can be dispersed over the outer surface of the battery cells 60 and dispersed to the top of the battery cells 60, ensuring that the top of the battery cells 60 can be cooled.

For example, the height of the box body 10 is H. The middle part along the height direction can be positioned at 2/5H to 3/5H. No matter where the middle part of the box body 10 along the height direction is positioned, it is ensured that the liquid inlet 120 is at the same height as the liquid outlet 130.

In some embodiments, both the liquid inlet 120 and the liquid outlet 130 are formed at the middle part of the box body 10 along the length direction.

It can be understood that both the liquid inlet 120 and the liquid outlet 130 are formed at the middle part of the box body 10 along the length direction, so that the liquid inlet 120 is aligned with the liquid outlet 130 in the length direction, ensuring that the immersion liquid follows the shortest flow path. In addition, the liquid inlet 120 is aligned with the liquid outlet 130 in the length direction, so that the possibility of vortex formation in the immersion liquid can be reduced, thereby lowering flow resistance and improving heat transfer efficiency.

For example, as shown in Figure 1, a length of the box body 10 is L. The middle part along the length direction can be positioned at 1/2L. In case that the immersion liquid is injected into the immersion chamber 110 at a certain flow rate and comes into contact with the battery cells 60, the immersion liquid can be dispersed in four directions: up, down, left, and right. The liquid inlet 120 is positioned at 1/2L, so that the flow paths of the immersion liquid dispersed to the left and right are the same, thereby facilitating the cooling effect on left and right regions of the battery cells 60 to be the same and improving temperature consistency of the battery cells 60.

For example, the length of the box body 10 is L. The middle part along the length direction can be positioned at 2/5L to 3/5L. No matter where the middle part of the box body 10 along the length direction is positioned, it is ensured that the liquid inlet 120 is corresponding to the liquid outlet 130 in the length direction.

In some embodiments, the liquid inlet 120 and the liquid outlet 130 are both formed at the middle part of the box body 10 along the height direction, and the liquid inlet 120 and the liquid outlet 130 are both formed at the middle part of the box body 10 along the length direction. Thus, the liquid inlet 120 is corresponding to the liquid outlet 130 in a XY plane formed by the height and length directions, ensuring that the immersion liquid follows the shortest flow path. In addition, the possibility of vortex formation in the immersion liquid can be reduced, thereby lowering flow resistance and improving heat transfer efficiency.

In some embodiments, the liquid inlet 120 is configured to inject immersion liquid into the immersion chamber 110. The flow rate of the immersion liquid at the liquid inlet 120 is Q, satisfying 8 L/min ≤ Q ≤ 20 L/min (litres per minute).

It can be understood that the flow rate of the immersion liquid at the liquid inlet 120 is limited to 8 L/min to 20 L/min, so that the immersion liquid is dispersed above and below the battery cells 60 after impacting the battery cells. The immersion liquid dispersed above the battery cells 60 can flow above the battery cells 60 along the width direction, thereby providing liquid cooling to the upper area of the battery cells 60. The immersion liquid dispersed below the battery cells 60 can flow below the battery cells 60 along the width direction, thereby providing liquid cooling to the lower area of the battery cells 60. In case that the flow rate of the immersion liquid at the liquid inlet 120 is less than 8 L/min, the immersion liquid may not be dispersed above the battery cells 60 after impacting the battery cells, resulting in poor cooling effect in the upper area of the battery cells 60. In case that the flow rate of the immersion liquid at the liquid inlet 120 is greater than 20 L/min, the impact force of the immersion liquid on the battery cells 60 is so large that the battery cells 60 may be damaged.

For example, the flow rate of the immersion liquid at the liquid inlet 120 is set to 8 L/min, 12 L/min, 16 L/min, 20 L/min, or any value between any two of these values.

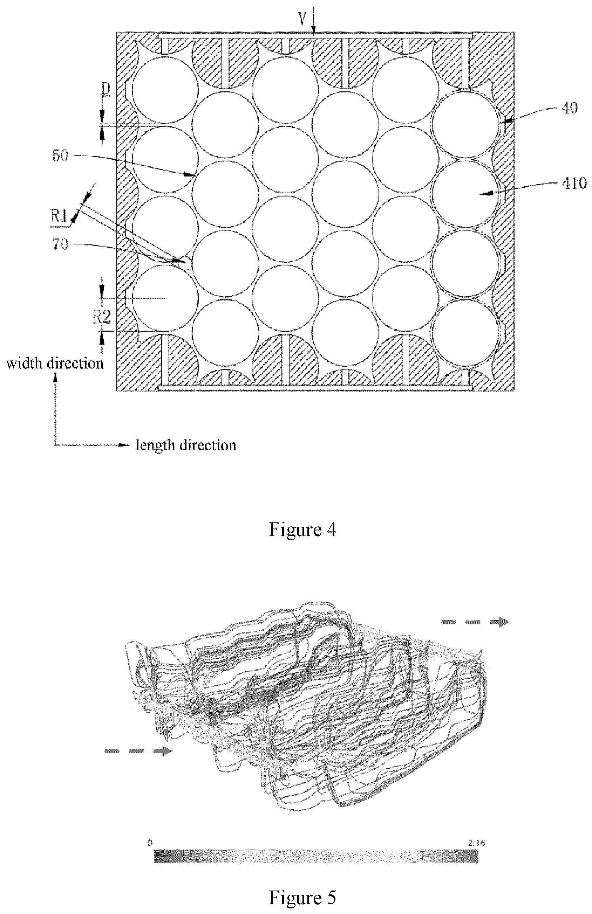

As shown in Figures 5 to 7, colour gradient distributions in the figures represent flow rates of the immersion liquid, measured in m/s (meters per second), and red arrows indicate the flow direction of the immersion liquid. Based on the selection of the flow rate of the immersion liquid at the liquid inlet 120 in combination with a diameter of the liquid inlet 120, the flow rate of the immersion liquid at the liquid inlet 120 can be about 1 m/s.

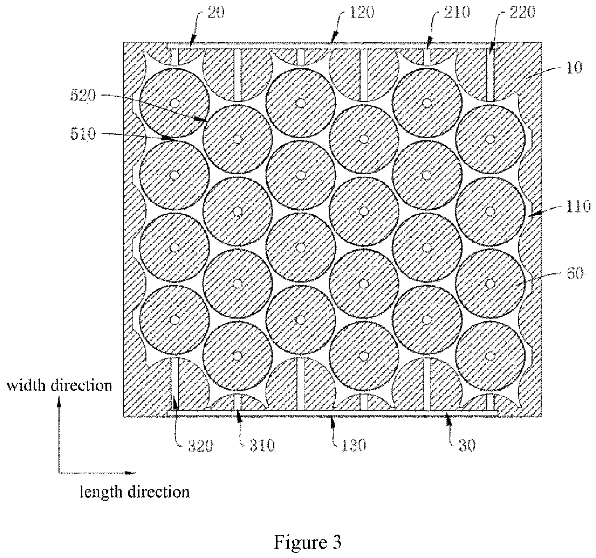

As shown in Figure 3, in some embodiments, a liquid inlet pipeline 20 is arranged at a chamber wall of the immersion chamber 110. The liquid inlet pipeline 20 extends along the length direction of the box body 10. One end of the liquid inlet pipeline 20 is in communication with the liquid inlet 120, and at least two liquid spray ports 210 are formed at the other end of the liquid inlet pipeline. At least two battery cells 60 are arranged in the immersion chamber 110 along the length direction of the box body 10. Each of liquid spray ports 210 corresponds to one of the battery cells 60.

It can be understood that the immersion liquid flowing in from the liquid inlet 120 can be redistributed through the liquid inlet pipeline 20, so that each row of battery cells can be cooled by the immersion liquid sprayed out through different liquid spray ports 210. Thus, the possibility of the immersion liquid flowing along the length direction of the box body 10 in the immersion chamber 110 can be reduced, and the immersion liquid is allowed to flow along the width direction of the box body 10 as much as possible, thereby shortening the flow path of the immersion liquid.

In addition, each row of battery cells corresponds to one of liquid spray ports 210, which can also reduce the temperature difference between the battery cells 60 and prevent a significant temperature difference between a first row of the battery cells and the Nth row of the battery cells. As a result, the temperature consistency of the battery cells 60 can be improved, and the service life of the battery can be extended.

In some embodiments, in case that a diameter of the liquid spray ports 210 is equal to the diameter of the liquid inlet 120, the flow rate of the immersion liquid at the liquid spray ports 210 is substantially equal to the flow rate of the immersion liquid at the liquid inlet 120. In some embodiments, in case that the diameter of the liquid spray ports 210 is smaller than the diameter of the liquid inlet 120, the flow rate of the immersion liquid at the liquid spray ports 210 may be slightly higher than the flow rate of the immersion liquid at the liquid inlet 120, so that an impact force of the immersion liquid to the outer surfaces of the battery cells 60 can be increased and the immersion liquid can be dispersed above the battery cells 60. In some embodiments, in case that the diameter of the liquid spray ports 210 is larger than the diameter of the liquid inlet 120, the flow rate of the immersion liquid at the liquid spray ports 210 is lower than the flow rate of the immersion liquid at the liquid inlet 120, so that the impact force of the immersion liquid to the outer surfaces of the battery cells 60 is reduced and the battery cells 60 can be prevented from being damaged.

As shown in Figure 3, in some embodiments, each of the liquid spray ports 210 is in communication with a liquid spray pipe 220. The liquid spray pipes 220 extend along the width direction of the box body 10. The liquid spray pipes 220 are perpendicular to the outer surfaces of the corresponding battery cells 60.

It can be understood that a direction in which the immersion liquid is sprayed towards the battery cells 60 can be limited by the liquid spray pipes 220. Since the liquid spray pipes 220 are perpendicular to the outer surfaces of the corresponding battery cells 60, the immersion liquid can be sprayed onto the surface of the battery cells 60 and spread as uniformly as possible in the four directions of up, down, left, and right, so that the cooling effect in each direction is as consistent as possible. As a result, the temperature consistency of the battery cells 60 can be improved, and the service life of the battery can be extended.

A length of the liquid spray pipe 220 can be the same as or different from each other. A distance between the liquid spray pipe 220 and the outer surface of the corresponding battery cell 60 is the same as each other.

As shown in Figure 3, in some embodiments, a liquid outlet pipeline 30 is arranged on the chamber wall of the immersion chamber 110. The liquid outlet pipeline 30 extends along the length direction of the box body 10. One end of the liquid outlet pipeline 30 is in communication with the liquid outlet 130, and at least two through holes 310 are formed at the other end, each of the through holes is corresponding to one of the battery cells 60.

It can be understood that the immersion liquid after cooling the battery cells 60 flows into the liquid outlet pipeline 30 through the through holes 310, is collected in the liquid outlet pipeline 30 and discharged from the liquid outlet 130. Therefore, it can facilitate the uniform discharge of the immersion liquid and layout of pipelines for water circulation. Each of the through holes 310 is in communication with one liquid discharge pipe 320. The immersion liquid after cooling the battery cells 60 can be flowed into the liquid outlet pipeline 30 through the liquid discharge pipe 320 and the through holes 310.

Each of the through holes 310 is corresponding to a row of the battery cells. The immersion liquid after cooling the row of the battery cells is discharged through the through holes 310. Thus, the possibility of the immersion liquid flowing along the length direction of the box body 10 in the immersion chamber 110 can be reduced, and the immersion liquid is allowed to flow along the width direction of the box body 10 as much as possible, thereby shortening the flow path of the immersion liquid.

In some embodiments, the liquid spray ports 210 and the through holes 310 are formed at the middle part of the box body 10 along the height direction. Along the length direction of the box body 10, the liquid spray ports 210 are in a one-to-one correspondence with the through holes 310.

The paths between the liquid spray ports 210 and the through holes 310 are the flow paths of the immersion liquid. The liquid spray ports 210 and the through holes 310 are located at the middle part of the box body 10 along the height direction and in a one-to-one correspondence in the length direction. Therefore, the liquid inlet 120 and the liquid outlet 130 can be corresponding to each other in the XY plane formed by the height and length directions, ensuring that the immersion liquid follows the shortest flow path. In addition, the possibility of vortex formation in the immersion liquid can be reduced, thereby lowering flow resistance and improving heat transfer efficiency.

For example, six liquid spray ports 210 are formed on the liquid inlet pipeline 20 along the length direction of the box body 10. Six through holes 310 are formed on the liquid outlet pipeline 30 along the length direction of the box body 10. The six liquid spray ports 210 and the six through holes 310 are all located at a height of 1/2H, and the six liquid spray ports 210 and the six through holes 310 are in a one-to-one correspondence along the length direction of the box body 10.

As shown in Figure 4, in some embodiments, a placement bracket is arranged on a top surface and/or a bottom surface of the box body 10. The placement bracket is configured to fix the battery cells 60.

It can be understood that the battery cells 60 can be reliably fixed in the immersion chamber 110 with the replacement bracket to prevent the battery cells 60 from tipping over and improve the stability of the fixation of the battery cells 60. The placement bracket is arranged on the top and/or bottom surface of the immersion chamber 110, so that the placement bracket no longer affects the flow and heat dissipation of the immersion liquid inside the immersion chamber 110 and can improve the stability and safety of the battery cells 60.

A placement bracket can be arranged only on the top surface of the box body 10. Alternatively, a placement bracket can be arranged only on the bottom surface of the box body 10. Alternatively, placement brackets can be arranged on both the top and bottom surfaces of the box body 10.

In some embodiments, the placement bracket is integrally formed with the box body 10. For example, the replacement bracket is integrally formed on the bottom surface of the box body 10. Alternatively, the placement bracket can be integrated into the box cover, so that the replacement bracket is arranged on the top surface of the box body 10.

As shown in Figure 4, in some embodiments, installation areas 40 are formed at the placement bracket. The installation areas 40 includes m installation positions 410 distributed along the width direction of the box body 10. The installation positions 410 are configured to fix the battery cells 60. Along the length direction of the box body 10, there are n installation areas 40, satisfying: 0 < m < n, and both m and n are integers.

It can be understood that the battery cells 60 are fixed to the installation positions 410. There are n battery cells 60 in the length direction of the box body 10 and m battery cells 60 in the width direction of the box body 10. Due to m < n and the immersion liquid flowing along the width direction of the box body 10, it can ensure that the immersion liquid follows a shorter flow path. The cooling of fewer battery cells 60 along this shorter flow path can reduce the temperature difference between the battery cells 60 at two ends, thereby improving the temperature consistency of the battery cells 60.

For example, if m = 4, and n = 6, it means that the installation areas 40 includes four installation positions 410 distributed along the width direction of the box body 10, and along the length direction of the box body 10, the number of the installation areas 40 are set to 6.

Please refer to Figures 3 and 4. In some embodiments, m installation positions 410 are arranged at intervals along the width direction of the box body 10 to form multiple first gaps 510 among multiple battery cells 60. N installation areas 40 are arranged at intervals along the length direction of the box body 10 to form multiple second gaps 520 among multiple battery cells 60. The multiple first gaps 510 are in communication with the multiple second gaps 520 to form flow guidance channels 50.

It can be understood that the flow guidance channels 50 are formed by the gaps among the outer surfaces of the battery cells 60, eliminating the need for the placement of additional flow guidance blocks, thereby reducing costs. In addition, the immersion liquid can be fully in contact with the outer surfaces of the battery cells 60. As the immersion liquid flows along the flow guidance channels 50, all areas of the outer surfaces of the battery cells 60 can be covered by the immersion liquid, ensuring sufficient cooling area and improving cooling efficiency.

In some embodiments, a width of the flow guidance channels 50 is D, satisfying: 2 millimetres ≤ D ≤ 4 millimetres.

It can be understood that the width D of the flow guidance channels 50 is set between 2 millimetres and 4 millimetres, which not only reduces space in the XY plane but also improves a flow field of the immersion liquid, facilitating uniform distribution of the immersion liquid. If the width D of the flow guidance channels 50 is less than 2 millimetres, the flow resistance of the immersion liquid will be increased, which is adverse to the uniform distribution of the immersion liquid, leading to inconsistent cooling effects in different directions and reducing the cooling efficiency. If the width D of the flow guidance channels 50 is greater than 4 millimetres, the flow field of the immersion liquid will be disrupted, resulting in inconsistent cooling effects in different directions and affecting cooling efficiency.

For example, the width D of the flow guidance channels 50 is set to 2 millimetres, 3 millimetres, 4 millimetres, or any value between any two of these values.

The width D of the flow guidance channels 50 is not affected by a radius of the battery cells 60. The value of the width of the above-mentioned flow guidance channels 50 is applicable to all types of cylindrical battery cells.

The immersion liquid cooling box in this embodiment of the present application is particularly suitable for cylindrical battery cells, and the width D of the flow guidance channels 50 is defined as the minimum gap between two adjacent cylindrical battery cells. That is, an extension line of the width D passes through central points of two adjacent battery cells 60.

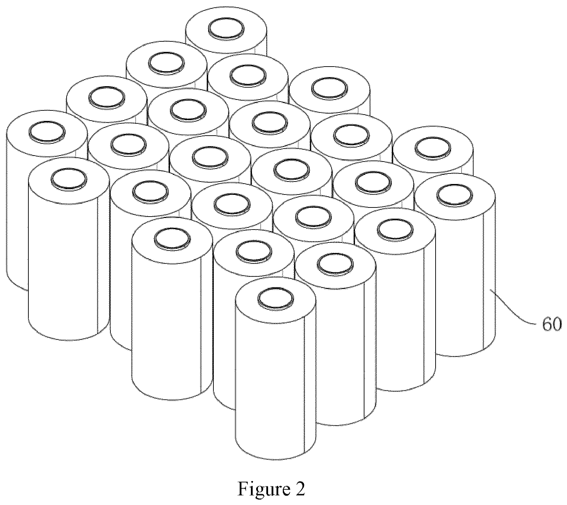

As shown in Figures 2 and 4, in some embodiments, the battery cells 60 are cylindrical battery cells, and the installation areas 40 in odd rows are distributed in a staggered manner with the installation areas 40 in even rows.

Since the battery cells 60 are cylindrical battery cells, the staggered distribution of the installation areas 40 in odd rows and the installation areas 40 in even rows can improve space utilization of the XY plane and maximize the use of internal space of the immersion chamber 110. As a result, more battery cells 60 can be placed inside the immersion chamber 110, thereby increasing the capacity of the battery pack.

The staggered distribution of the installation areas 40 in odd rows and the installation areas 40 in even rows refers to extension lines of the first gaps 510 of the installation areas 40 in odd rows passing through the central points of the installation areas 40 in even rows. Alternatively, the first gaps 510 of the installation areas 40 in odd rows are distributed in a staggered manner with the first gaps 510 of the installation areas 40 in even rows.

In some embodiments, one flow guidance region is formed between every at least two adjacent battery cells, and the flow guidance regions are configured to allow the immersion liquid to flow through.

It can be understood that the flow guidance regions formed between multiple battery cells are configured to allow the immersion liquid to flow through, so that the immersion liquid can cool multiple battery cells simultaneously, thereby improving cooling efficiency.

As shown in Figure 4, in some embodiments, one flow guidance region 70 is formed between every three adjacent battery cells 60. A cross-section of the flow guidance regions 70 in a horizontal direction is circular and is circumscribed by the three battery cells 60. The radius of the flow guidance regions 70 is R1, and the radius of the battery cells 60 is R2, satisfying: 1/6 ≤ R1/R2 ≤ 1/4.

It can be understood that the ratio of the radius R1 of the flow guidance regions 70 to the radius R2 of the battery cells 60 is set to be between 1/6 and 1/4, which not only reduces space in the XY plane but also improve a flow field of the immersion liquid, thereby facilitating uniform distribution of the immersion liquid. If the ratio of the radius R1 of the flow guidance regions 70 to the radius R2 of the battery cells 60 is less than 1/6, a flow resistance of the immersion liquid will be increased, which is adverse to the uniform distribution of the immersion liquid, leading to inconsistent cooling effects in different directions and reducing the cooling efficiency. If the ratio of the radius R1 of the flow guidance regions 70 to the radius R2 of the battery cells 60 is greater than 1/4, the flow field of the immersion liquid will be disrupted, resulting in inconsistent cooling effects in different directions and reducing cooling efficiency.

For example, the ratio of the radius R1 of the flow guidance regions 70 to the radius R2 of the battery cells 60 is set to 1/6, 1/5, 1/4, or any value between any two of these values.

For example, the radius R1 of the flow guidance regions 70 is set to 5 millimetres, and the radius R2 of the battery cells 60 is set to 20 millimetres. For example, the radius R1 of the flow guidance regions 70 is set to 4.7 millimetres, and the radius R2 of the battery cells 60 is set to 23 millimetres.

Embodiments of the present application further provide a battery pack including an immersion liquid cooling box according to the aforementioned embodiment.

In the embodiments of the present application, the liquid inlet 120 and the liquid outlet 130 are formed on two opposite sides of the box body 10 in the width direction, so that the immersion liquid can flow along the width direction of the box body 10, thereby shortening the flow path of the immersion liquid, reducing the temperature difference between the battery cells 60, and extending the service life of the battery.

## Claims

1. An immersion liquid cooling box, comprising:
a box body, an immersion chamber for placing battery cells being formed in the box body, a liquid inlet and a liquid outlet of the immersion chamber being formed on an outer surface of the box body, the liquid inlet and the liquid outlet being formed on two opposite sides of the box body in a width direction of the box body.

2. The immersion liquid cooling box according to claim 1, wherein the liquid inlet and the liquid outlet are both located at a middle part of the box body along a height direction of the box body;
and/or, the liquid inlet and the liquid outlet are both located at a middle part of the box body along a length direction of the box body.

3. The immersion liquid cooling box according to claim 2, wherein the liquid inlet is configured to inject immersion liquid into the immersion chamber, and a flow rate of the immersion liquid at the liquid inlet is Q, satisfying: 8 L/min ≤ Q ≤ 20 L/min.

4. The immersion liquid cooling box according to any one of claims 1 to 3, wherein a liquid inlet pipeline is arranged on a chamber wall of the immersion chamber, the liquid inlet pipeline extends along the length direction of the box body, one end of the liquid inlet pipeline is in communication with the liquid inlet, and at least two liquid spray ports are formed at another end, at least two battery cells are arranged in the immersion chamber along the length direction of the box body, and each of the liquid spray ports is corresponding to one of the battery cells.

5. The immersion liquid cooling box according to claim 4, wherein a liquid spray pipe is in communication with each of the liquid spray ports, the liquid spray pipe extends along the width direction of the box body, and wherein the liquid spray pipe is perpendicular to an outer surface of one corresponding battery cell.

6. The immersion liquid cooling box according to claim 4 or 5, wherein a liquid outlet pipeline is arranged on the chamber wall of the immersion chamber, the liquid outlet pipeline extends along the length direction of the box body, one end of the liquid outlet pipeline is in communication with the liquid outlet, and at least two through holes are formed at another end, and each of the through holes is corresponding to one of the battery cells.

7. The immersion liquid cooling box according to claim 6, wherein the liquid spray ports and the through holes are both formed at a middle part of the box body along the height direction of the box body, and the liquid spray ports are in a one-to-one correspondence with the through holds along the length direction of the box body.

8. The immersion liquid cooling box according to any one of claims 1 to 7, wherein a placement bracket is arranged on a top surface and/or a bottom surface of the box body, and the placement bracket is configured to fix the battery cells.

9. The immersion liquid cooling box according to claim 8, wherein installation areas are formed at the placement bracket, the installation areas includes m installation positions distributed along the width direction of the box body, the installation positions are configured to fix the battery cells, and along the length direction of the box body, there are n installation areas, satisfying: 0 < m < n, and both m and n are integers.

10. The immersion liquid cooling box according to claim 9, wherein m installation positions are arranged at intervals along the width direction of the box body to form a plurality of first gaps among a plurality of battery cells, n installation areas are arranged at intervals along the length direction of the box body to form a plurality of second gaps among the plurality of battery cells, and the plurality of first gaps are in communication with the plurality of second gaps to form flow guidance channels.

11. The immersion liquid cooling box according to claim 10, wherein a width of the flow guidance channels is D, satisfying: 2 millimetres ≤ D ≤ 4 millimetres.

12. The immersion liquid cooling box according to any one of claims 9 to 11, wherein the battery cells comprise cylindrical battery cells, and the installation areas in odd rows are distributed in a staggered manner with the installation areas in even rows.

13. The immersion liquid cooling box according to claim 12, wherein one flow guidance region is formed between every at least two adjacent battery cells, and the flow guidance regions are configured to allow the immersion liquid to flow through.

14. The immersion liquid cooling box according to claim 13, wherein one flow guidance region is formed between every three adjacent battery cells, a cross-section of the flow guidance region in a horizontal direction is circular and is circumscribed by the three battery cells, wherein a radius of the flow guidance region is R1, a radius of the battery cells is R2, satisfying: 1/6 ≤ R1/R2 ≤ 1/4.

15. A battery pack, comprising the immersion liquid cooling box according to any one of claims 1 to 14.
